# EUROPÄISCHE PATENTSCHRIFT

(11) **EP 1 495 889 B1**
(45) Veröffentlichungstag und Bekanntmachung des Hinweises auf die Patenterteilung: **18.12.2013**
(21) Anmeldenummer: 04015810.7
(22) Anmeldetag: 06.07.2004
(51) Int. Cl.: B60J 7/00

(54) **Fahrzeugdach, Himmelmodul sowie Verfahren zur Montage eines Fahrzeugdaches**
Vehicle roof, headliner-modul and method for mounting a vehicle roof
Toit de véhicule, revêtement de toit et procédé de montage d'un toit de véhicule

(30) Priorität: 10.07.2003 DE 10331271
(43) Veröffentlichungstag der Anmeldung: 12.01.2005
(73) Patentinhaber: Webasto SE, 82131 Stockdorf (DE)
(72) Erfinder: Haas, Josef, 82229 Seefeld (DE); Oberhaus, Peter, 82266 Inning a. A. (DE); Schönauer, Miriam, 85405 Nandelstadt (DE); Kölbl, Michael, 82061 Neuried (DE); Schulz, Horst, 86947 Schwabhausen (DE)
(74) Vertreter: Schwan - Schwan - Schorer

(56) Entgegenhaltungen:
- EP-A- 1 285 794
- EP-A- 1 407 911
- EP-A- 1 422 093
- EP-A- 1 449 692
- DE-A- 19 914 427
- FR-A- 2 603 233
- US-A- 4 738 481
- US-A- 4 958 878
- US-A- 5 303 970
- US-A- 5 927 784
- US-A- 6 065 793
- US-A1- 2003 006 630

## Beschreibung

Die vorliegende Erfindung betrifft ein Fahrzeugdach, insbesondere ein Fahrzeugdach mit einem transparenten Bereich.

Aus der DE 199 10 994 A1 ist eine Sonnenschutzrolloanordnung für die Windschutzscheibe eines Fahrzeugs bekannt, die von zwei spiegelbildlich angeordneten, getrennten Rollos gebildet wird, die seitlich entlang der jeweiligen A-Säule geführt sind. In der Mitte der Windschutzscheibe bleibt ein Spalt frei, der nicht von einem der beiden Rollos abgedeckt wird. Ferner sind die beiden Rollos nur an ihrem äußeren Ende geführt.

In der DE 100 19 787 A1 ist ein Rollo aus elastischem Material für die Windschutzscheibe eines Kraftfahrzeugs bekannt, welches beidseitig entlang der A-Säulen geführt ist und im ausgezogenen Zustand die gesamte Breite der Windschutzscheibe abdeckt. Der Ausgleich einer Divergenz zwischen den beiden seitlichen Führungen erfolgt über die Elastizität des Rollostoffs.

Aus der DE 38 13 153 A1 ist eine Rolloanordnung für die Windschutzscheibe eines Kraftfahrzeugs bekannt, welche zwei spiegelbildlich angeordnete Rollos mit einem Mittelspalt dazwischen aufweist, die seitlich an der jeweiligen A-Säule geführt sind. Die Wickelwelle eines jeden Rollos ist axial verschieblich gelagert und trägt eine trapezförmige Rollobahn mit einseitiger Schräge, um eine Spaltbildung zwischen der abgewickelten Rollobahn und der jeweiligen A-Säule zu vermeiden.

Aus der WO 02/42103 A1 ist ein Fahrzeugdach bekannt, bei welchem zur Abdeckung der Windschutzscheibe eines Kraftfahrzeugs zwei einen spitzen Winkel zueinander bildende Rollobahnen, die spiegelbildlich zueinander angeordnet sind, vorgesehen sind, wobei im Bereich der Windschutzscheibe jede Rollobahn nur im Bereich der jeweiligen A-Säule geführt ist. Die beiden Rollobahnen sind an sich gerade ausgebildet, wobei im ausgezogenen Zustand im Bereich der Mitte der Windschutzscheine ein sich nach unten verbreitender nicht abgedeckter Spalt verbleibt.

In den Patentschriften US 6,065,793 und US 4,738,481 sind Fahrzeugdächer beschrieben, bei denen eine Verglasung durch Abdeckelemente abgeschattet werden kann, welche entlang einer Mittelkonsole verschoben wird. Die Patenanmeldungen US 2003/0006630 und EP 1 285 794 A1 betreffen Fahrzeugdächer mit transparenten Bereichen, die mittels eines Rollos mit vorne liegendem Querspriegel abgeschattet werden können. Die seitlichen Begrenzungen der Dachöffnungen dieser vier letztgenannten Druckschriften sind aber nicht divergent.

In der nicht vorveröffentlichten älteren deutschen Patentanmeldung mit dem Aktenzeichen 103 15 635.6 ist ein Fahrzeugdach beschrieben, wobei ein transparenter Dachbereich von zwei spiegelbildlich angeordneten Rollos abgedeckt werden kann, die jeweils seitlich am Dachrand und in einer Dachmittelkonsole, die sich in Dachlängsrichtung erstreckt, geführt sind. Die beiden Führungen in der Dachmittelkonsole sind dabei ebenfalls parallel ausgebildet.

In den beiden nicht vorveröffentlichten älteren europäischen Patentanmeldungen EP 1 407 911 A1 und EP 1 449 692 A1 werden über divergent verlaufende Bereiche eines Fahrzeugdachs Sonnenschutzanordnungen verfahren. Allerdings lassen diese teilweise Spalte frei, welche nicht abgedeckt werden.

Es ist Aufgabe der vorliegenden Erfindung, ein Fahrzeugdach zu schaffen, welches in der Lage ist, im Bereich der Vordersitze einerseits einen möglichst großen Lichteinfall zu ermöglichen und andererseits wahlweise aber auch einen Schutz vor zu starkem Lichteinfall zu bieten. Dabei soll das Fahrzeugdach möglichst einfach herstellbar und bedienbar sein und im Betrieb nur relativ geringem Verschleiß ausgesetzt sein. Außerdem soll die Bauhöhe des Fahrzeugdaches gering sein.

Diese Aufgaben werden erfindungsgemäß gelöst durch ein Fahrzeugdach gemäß Anspruch 1.

Die erfindungsgemäße Lösungen trägt dazu bei, einerseits einen möglichst hohen Lichteinfall im Bereich der Vordersitze des Fahrzeugs zu ermöglichen, ermöglichen jedoch andererseits auch wahlweise eine mehr oder weniger vollständige Abdeckung dieses Bereichs, wenn ein zu starker Lichteinfall, z.B. bei starker Sonnenseinstrahlung, vermieden werden soll. Insbesondere sind die erfindungsgemäßen Lösungen für eine Dachkonstruktion geeignet, bei welcher sich die Windschutzscheibe ohne karosseriefesten Querholm mindestens ein Stück weit in den horizontalen Dachbereich oberhalb der Vordersitze hinein erstreckt.

Bei dem Fahrzeugdach gemäß Anspruch 1 ist vorteilhaft, dass dadurch, dass eine in Dachquerrichtung verlaufende Quertraverse, die an jeder Seite in einer Führung in Dachlängsrichtung verschiebbar geführt ist, vorgesehen ist, auf einfache Weise Sonnenblenden, die üblicherweise an einem das obere Ende der Windschutzscheibe bildenden Querholm vorgesehen sind, mittels Verschiebung der Quertraverse in Dachlängsrichtung nach hinten geschoben werden können, wenn sie gerade nicht benötigt werden, um einen möglichst großen Lichteinfall im Bereich der Vordersitze zu ermöglichen, und andererseits mittels Verschiebung der Quertraverse nach vorn, z.B. in die übliche Stellung fest angebrachter Sonnenblende, gebracht werden können, wenn die Funktionselement genutzt werden sollen. Dies kann insbesondere auch bei divergent verlaufenden seitlichen Führungen realisiert werden, da die Quertraverse zwei verschiebbare Seitenteile aufweist, welche die Divergenz ausgleichen.

Bevorzugte Ausgestaltungen der Erfindungen ergeben sich aus den Unteransprüchen.

Im Folgenden wird die Erfindung anhand der beigefügten Zeichnungen beispielhaft näher erläutert. Dabei zeigen:
Fig. 1 eine schematische perspektivische Ansicht eines erfindungsgemäßen Fahrzeugdaches aus dem Fahrzeuginnenraum gemäß einer ersten Ausführungsform;
Fig. 2 eine vergrößerte Ansicht eines Abschnitts der Mittelkonsole mit Führungsschienen von Fig. 1, gesehen von schräg unten;
Fig. 3 eine Ansicht der Mittelkonsole von Fig. 2 mit den Führungsschienen und den seitlichen Rand eines Rollos bei der Montage, gesehen von schräg oben;
Fig. 4 eine Ansicht wie Fig. 1, wobei jedoch eine zweite Ausführungsform der Erfindung gezeigt ist;
Fig. 5 eine Ansicht von oben eines erfindungsgemäßen Himmelmoduls mit einer verschiebbaren Quertraverse in einer ersten Position;
Fig. 6 eine Ansicht wie Fig. 5, wobei eine zweite Position der Quertraverse gezeigt ist;
Fign. 7 und 8 Ansichten wie Fign. 5 und 6, wobei zusätzlich eine mittig geführte verschiebbare Mittelkonsole vorgesehen ist;
Fign. 9 und 10 Ansichten wie Fign. 7 und 8, wobei die Mittelkonsole hinten am seitlichen Dachrand geführt ist;
Fign. 11 und 12 Ansichten wie Fign. 7 und 8, wobei zusätzlich zwei einteilige Platten als Sonnenschutz vorgesehen sind;
Fign. 13 und 14 Ansichten wie Fign. 11 und 12, wobei statt der einteiligen Platten mehrteilige Platten als Sonnenschutz vorgesehen sind;
Fign. 15 und 16 Ansichten wie Fign. 11 und 12, wobei statt der Platten zwei Rollos auf je einer zylindrischen Wickelwelle als Sonnenschutz vorgesehen sind; und
Fign. 17 und 18 Ansichten wie Fign. 15 und 16, wobei zwei Rollos auf je einer konischen Wickelwelle als Sonnenschutz vorgesehen sind.

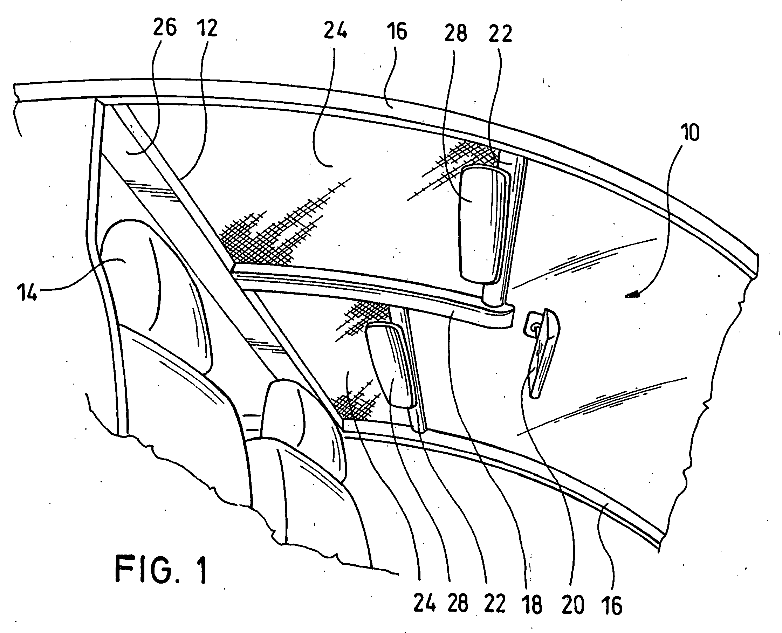

In den Fign. 1 bis 3 ist eine erste Ausführungsform eines Fahrzeugdaches gezeigt, bei welchem sich die Windschutzscheibe 10 eines Kraftfahrzeugs bis in den im wesentlichen horizontal verlaufenden Dachbereich hinein erstreckt, wobei bei der gezeigten Ausführungsform das hintere Ende 12 der Windschutzscheibe etwas hinter den Kopfstützen 14 der Vordersitze liegt. Seitlich wird die Windschutzscheibe 10 von zwei Seitenholmen (bzw. A-Säulen) 16 begrenzt. In dem im Wesentlichen horizontal verlaufenden Abschnitt der Windschutzscheibe 10 ist mittig eine sich in Dachlängsrichtung erstreckende dachfest montierte Mittelkonsole vorgesehen, die sich nach vom bis nahe zu einem Innenrückspiegel 20 erstreckt.

Zwischen dem jeweiligen Seitenholm 16 und der Mittelkonsole 18 ist jeweils eine mittels eines Zugspriegels 22 nach vorn ausziehbare Rolloanordnung 24 vorgesehen, deren Rollobahn jeweils auf eine (in Fig. 1 nicht gezeigte) Wickelwelle aufwickelbar ist, die in Dachquerrichtung verläuft und oberhalb eines im Bereich des hinteren Endes 12 der Windschutzscheibe 10 verlaufenden undurchsichtigen Dachabschnitts 26 angeordnet ist.

An der Unterseite eines jeden Zugspriegels 22 ist eine klappbare Sonnenblende 28 angeordnet, die durch das Ausziehen der jeweiligen Rolloanordnung 24 nach vorn an der für Sonnenblenden üblichen Position etwas hinter dem Innenrückspiegel 20 zu liegen kommt.

Der Zugspriegel 22 und vorzugsweise auch die Rollobahn einer jeden Rolloanordnung 24 ist bzw. sind auf der Dachrand hinweisenden Seite in einer entlang des jeweiligen Seitenholms 16 verlaufenden dachfesten Führung und auf der zur Fahrzeugmitte hinweisenden Seite in einer in der oberen Seite der Mittelkonsole 18 verlaufenden Führung 30 geführt.

Die Betätigung der Zugspriegel 22 kann manuell oder mittels eines Antriebs (vorzugsweise eines Kabelantriebs) erfolgen, wobei die beiden Zugspriegel 22 vorzugsweise unabhängig voneinander betätigbar sind, um ein individuelles Ausziehen der Rolloanordnungen 24 für jede Seite zu ermöglichen.

Die beiden (nicht gezeigten) Wickelwellen sind vorzugsweise zylindrisch ausgebildet, wobei die Rollobahn als gerade Bahn ausgebildet ist.

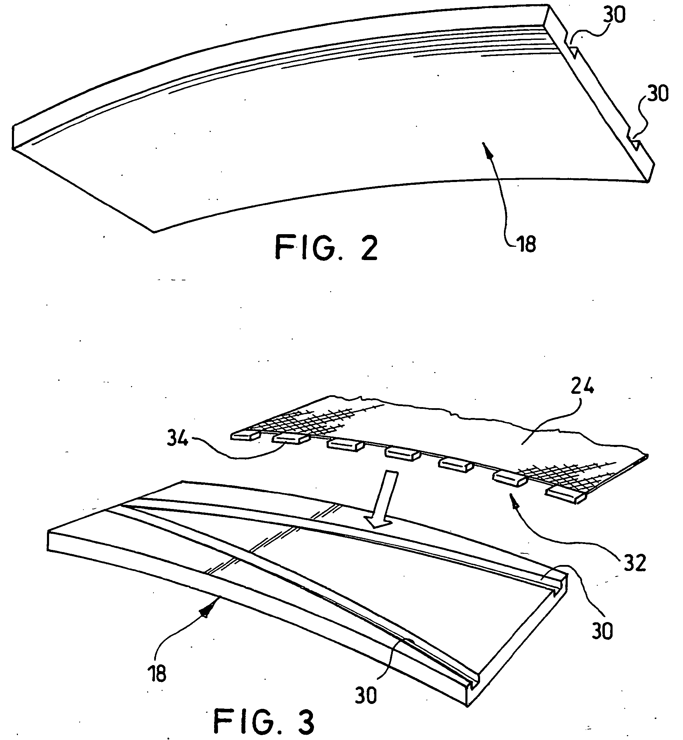

Während die beiden Seitenholme 16 im horizontalen Dachbereich im wesentlichen parallel verlaufen, verlaufen sie ab dem Übergang zur schräg geneigten eigentlichen Windschutzscheibe in der Regel divergent (gesehen in der Richtung von dem Fahrzeugheck zur Fahrzeugfront). Um eine entsprechende Divergenz der äußeren Führung eines jeden Zugspriegels 22 auszugleichen, sind die Führungen 30 in der Mittelkonsole 18 mit einer entsprechenden Divergenz ausgebildet, so dass die jeweilige innere Führung 30 des Zugspriegels 22 zu der äußeren Führung am Seitenholm 16 über den gesamten Ausziehbereich im wesentlichen parallel verläuft. In den Fign. 2 und 3 ist beispielhaft gezeigt, wie die inneren Führungen 30 für die beiden Zugspriegel 22 (bzw. die beiden Rollobahnen) verlaufen können. Der innere Rand der Rollobahn der Rolloanordnung 24, der in Fig. 3 mit dem Bezugszeichen 32 bezeichnet ist, ist mittels Gleitelementen 34 in der jeweiligen Führung 30 der Mittelkonsole 18 geführt.

Da die Rolloanordnung 24 oberhalb der Mittelkonsole 18 angeordnet sind, wird der sich beim Ausziehen der beiden Rolloanordnungen 24 ergebende, sich nach vom verbreiternde Spalt von der Mittelkonsole 18 bezüglich des Fahrzeuginnenraums abgedeckt. Zweckmäßigerweise ist dabei die Breite der Mittelkonsole 18 so gewählt, dass sie größer ist als die maximale Divergenz der beiden Seitenholme 16 am Endpunkt der Ausziehbewegung der Rolloanordnungen 24.

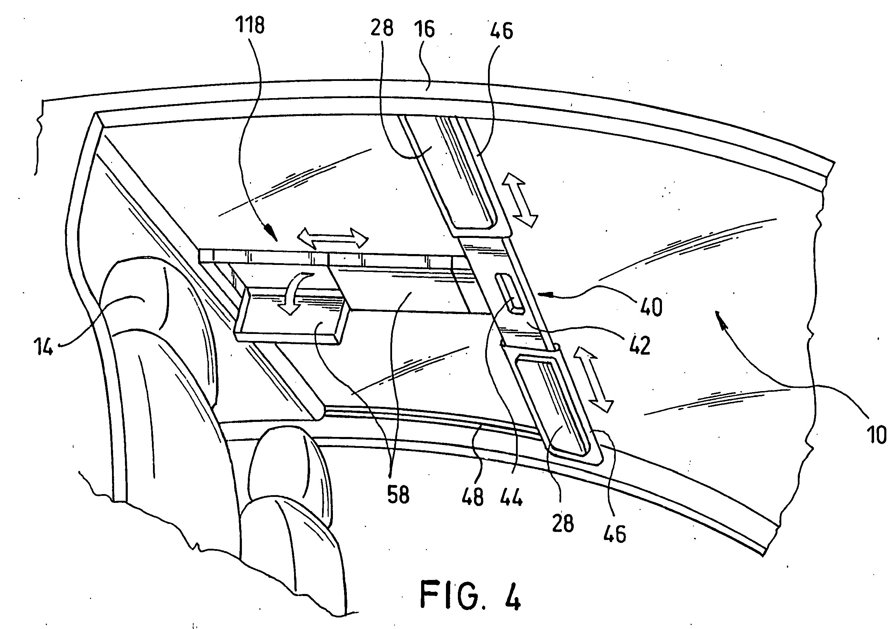

In den Fign. 4, 7 und 8 ist eine Ausführungsform der Erfindung gezeigt, welche ebenfalls für eine Dachkonstruktion in der Art von Fig. 1 verwendet werden kann, d.h. für ein Kraftfahrzeugdach, bei welchem sich die Windschutzscheibe einteilig bis etwa in den Dachbereich oberhalb der Kopfstützen 14 erstreckt. Im Unterschied zu der fest montierten Mittelkonsole von Fig. 1 ist die Mittelkonsole 118 der Ausführungsform von Fig. 4 an ihrem vorderen Ende fest mit einer Quertraverse 40 verbunden, mittels welcher sie in Dachlängsrichtung ausziehbar bzw. verschiebbar ist.

Die Quertraverse 40 umfasst ein Mittelteil 42, welches fest mit dem vorderen Ende der Mittelkonsole 118 verbunden ist und mit einem als Griff oder Mulde ausgebildeten Betätigungselement 44 für die manuelle Betätigung versehen, sowie zwei beiderseits des Mittelteils 42 angeordnete Seitenteile 46. Die beiden Seitenteile 46 tragen jeweils eine klappbare Sonnenblende 28 an ihrer Unterseite und sind am zum Dachrand hinweisenden Ende in einer entlang des Seitenholms 16 verlaufenden dachfesten Führung 48, die vorzugweise als Schiene ausgebildet ist, geführt.

Die Führungen 48 sind an der Oberseite eines Himmelmoduls 50 vorgesehen, welches von unten fest an den Seitenholmen 16 bzw. der festen Dachhaut im Dachbereich hinter der Windschutzscheibe 10 montiert ist. Das Himmehnodul 50 umfasst dabei eine Himmelfläche 52, die in üblicher Weise zur Verkleidung der Seitenholme 16 bzw. der festen Dachfläche bezüglich des Fahrzeuginnenraums dient. Die beiden Führungsschienen 48 sind dabei im seitlichen Randbereich des Himmelmoduls 50 an der Oberseite der Himmelfläche 52 angeordnet.

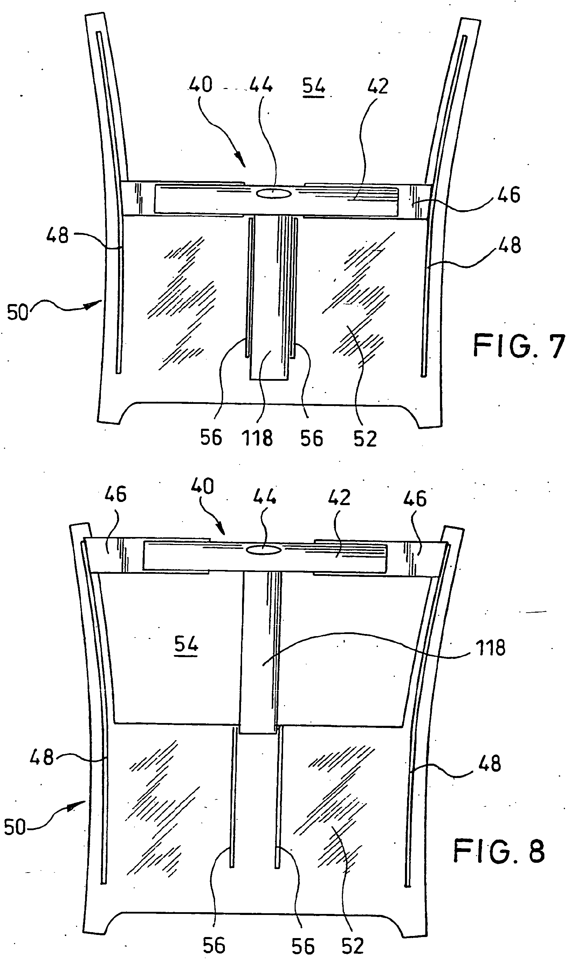

Im vorderen Bereich des Himmelmoduls 50 ist die Himmelfläche 52 mit einer Aussparung 54 für den hinteren Bereich der Windschutzscheibe 10 versehen, so dass der vordere Bereich des Himmelmoduls 50 lediglich zum Verkleiden der Seitenholme 16 dient, wobei sich die beiden Führungen 48 bis nahe an das vordere Ende des Himmelmoduls 50 hin erstrecken. Gemäß Fig. 7 verlaufen die Führungsschienen 48 im hinteren Bereich des Himmelmoduls 50 im wesentlichen parallel, während sie im Bereich der Aussparung 54 im vorderen Teil divergent verlaufen. Um die Divergenz im vorderen Teil des Himmelmoduls 50 auszugleichen, sind die beiden Seitenteile 46 der Quertraverse 40 bezüglich des Mittelteils 42 in Dachquerrichtung verschiebbar, z.B. teleskopartig, gelagert (siehe Pfeile in Fig. 4). Dadurch kann die Quertraverse soweit nach vorn geschoben werden, dass sie die Aussparung 54 in Querrichtung überspannt.

Die Mittelkonsole 118 ist seitlich an je einer Führung 56 geführt, die an der Oberseite der Himmelfläche 52 angeordnet ist, wobei die beiden Führungen 56 parallel zueinander verlaufen und sich mittig im hinteren Teil des Himmelmoduls 50 in Dachlängsrichtung bis zum Beginn der Aussparung 54 erstrecken. Auf diese Weise ist die Mittelkonsole 118 in Dachlängsrichtung verschiebbar gelagert, wobei die Betätigung durch den Mittelteil 42 der Quertraverse 40 erfolgt.

Gemäß Fig. 4 kann die Mittelkonsole 118 an ihrer Unterseite mit nach unten aufklappbaren Ablagefächern 58 versehen sein. Alternativ oder zusätzlich können jedoch auch andere Funktionselemente, z.B. Beleuchtungseinrichtungen, Lautsprecher, Bedienelemente oder Anzeigeelemente, an der Mittelkonsole 118 vorgesehen sein.

In der Darstellung von Fig. 7 ist die Quertraverse 40 bis zum hinteren Ende der Aussparung 54 bzw. bis zum vorderen Ende der Himmelfläche 52 nach hinten geschoben, wobei die Mittelkonsole 118 in dieser Stellung oberhalb der Himmelfläche 52 liegt und bezüglich des Fahrzeuginnenraums von dieser verdeckt ist. In der Stellung von Fig. 7 wird somit ein maximaler Lichteinfall durch die Windschutzscheibe 10 hindurch erzielt.

Mittels manueller Betätigung der Betätigungseinrichtung 44 kann die Quertraverse 40 zusammen mit der Mittelkonsole 118 aus der in Fig. 7 gezeigten Stellung stufenlos in die in Fig. 8 gezeigte Stellung verschoben werden, in welcher die Quertraverse 40 am vorderen Ende des Himmelmoduls 50 angeordnet ist, wobei sich dann die Sonnenblenden 28 in der üblichen Funktionsstellung befinden und die Mittelkonsole 118 entsprechend nach vom unter den vom hinteren Ende der Windschutzscheibe 10 gebildeten transparenten Dachbereich geschoben ist, so dass in dieser Stellung auch die Funktionselemente der Mittelkonsole 118 in der üblichen Weise genutzt werden können.

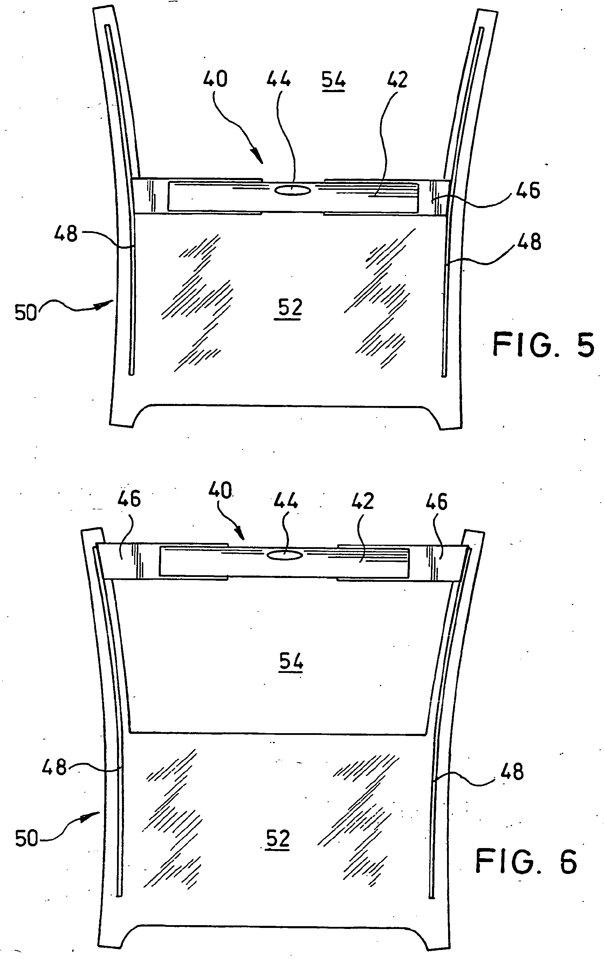

Die in den Fign. 5 und 6 gezeigte Ausführungsform unterscheidet sich von der Ausführungsform gemäß Fig. 7 und 8 im wesentlichen dadurch, dass keine Mittelkonsole 118 mit den entsprechenden Führungen 56 vorgesehen ist, sondern lediglich die in den Führungen 48 in Dachlängsrichtung verschiebbare Quertraverse 40.

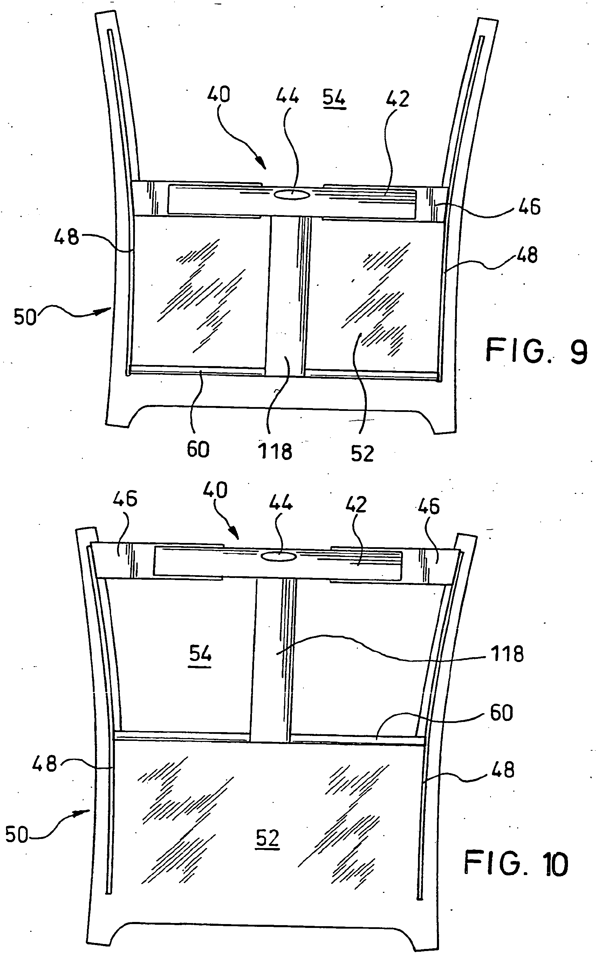

Die in den Fign. 9 und 10 gezeigte Ausführungsform unterscheidet sich von der Ausführungsform gemäß Fign. 7 und 8 im wesentlichen dadurch, dass die in Dachlängsrichtung verschiebbare Mittelkonsole 118 nicht an im hinteren Teil des Himmelmoduls 50 mittig vorgesehen Führungsschienen 56 geführt ist, sondern an ihrem hinteren Ende mit einem sich in der Dachquerrichtung erstreckenden Querspriegel 60 versehen ist, der sich über die gesamte Breite des Himmelmoduls 50 erstreckt und mit seinen beiden nach außen weisenden Enden in einem hinteren Teil der sich an den beiden Seitenrändern des Himmelmoduls 50 in Dachlängsrichtung erstreckenden Führungen 48 in Dachlängsrichtung verschiebbar geführt ist. Die beiden Führungen 48 verlaufen dabei im hinteren Teil des Himmelmoduls 50 im wesentlichen parallel, so dass der Querspriegel 60 als starres Element ohne Ausgleich in Querrichtung ausgebildet sein kann.

Auf diese Weise ist das hintere Ende der Mittelkonsole 118 in der Dachlängsrichtung verschiebbar geführt, wobei keine zusätzlichen Führungsschienen 56, wie bei der Ausführungsform gemäß Fign. 7 und 8, erforderlich sind.

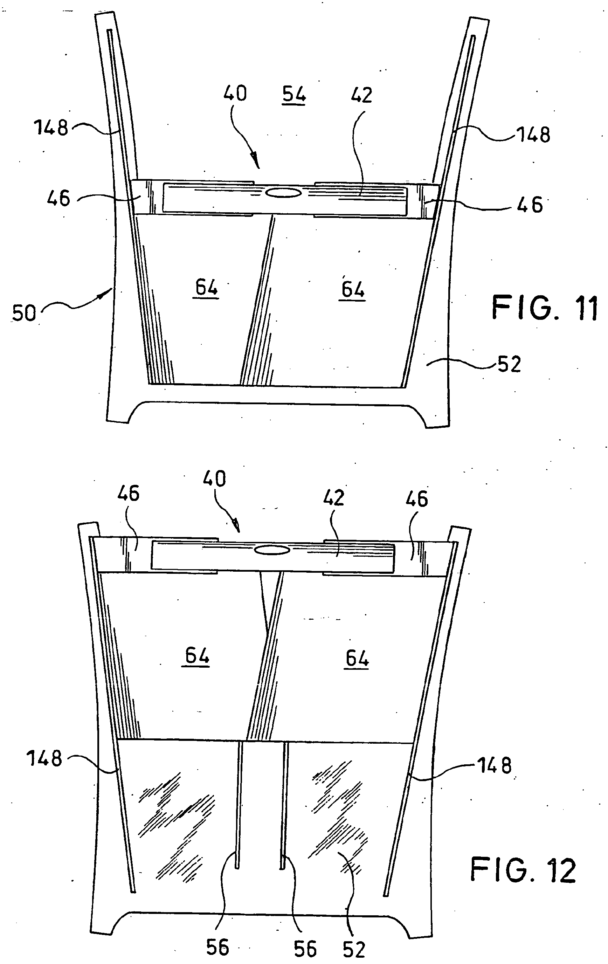

In den Fign. 11 und 12 ist eine Abwandlung der Ausführungsform gemäß Fign. 7 und 8 gezeigt, bei welcher zusätzlich zwischen der Mittelkonsole 118 und dem seitlichen Dachrand bzw. dem Seitenholm 16 eine Abdeckeinrichtung 64 vorgesehen ist, die jeweils von einer einteiligen Platte gebildet wird, die an ihrem vorderen Ende von der Quertraverse 40 zu einer Verschiebebewegung in der Dachlängsrichtung mitgenommen wird, wobei jede Abdeckplatte 64 zweckmäßigerweise mit dem jeweiligen Seitenteil 46 der Quertraverse 40 verbunden ist. Die Abdeckplatten 64 können beispielsweise trapezförmig ausgebildet sein und sind an ihrem jeweiligen nach außen weisenden Rand in einer an der Oberseite des Himmelmoduls 50 integrierten geraden Führungsschiene 148 verschiebbar geführt. Die beiden Führungsschienen 148 sind entsprechend der Geometrie der Seitenholme 60 bzw. A-Säulen 16 von hinten nach vom divergent und entsprechend um einen bestimmten Winkel gegenüber der Fahrzeuglängsrichtung verdreht. Die beiden Führungsschienen 148 können zugleich auch als Führung für die Quertraverse 40 ausgebildet sein. An ihrem nach innen weisenden Randbereich sind die beiden Platten so an der Mittelkonsole 118 gelagert, dass sie bezüglich der Mittelkonsole 118 in Dachquerrichtung verschiebbar sind.

In der in Fig. 11 gezeigten Position sind die beiden Abdeckplatten 64 im wesentlich vollständig über die Himmelfläche 52 im hinteren Teil des Himmelmoduls 50 geschoben, sodass die Aussparung 54 der Himmelfläche vollständig frei gelegt ist und ein maximaler Lichteinfall durch die Windschutzscheibe 10 hindurch erzielt wird.

Durch Betätigung der Quertraverse 40 können die beiden Platten 64 aus der in Fig. 11 gezeigten Position entlang der Führungsschienen 148 nach vorn geschoben werden, bis die Quertraverse 40 das vordere Ende der Führungsschienen 148 erreicht hat, siehe Fig. 12. In dieser Position decken die beiden Platten 64 die Aussparung 54 der Himmelfläche 52 im wesentlichen vollständig ab. Im Verlauf dieser Verschiebebewegung entfernen sich die beiden Platten 64 aufgrund der Divergenz der Führungen 148 in Dachquerrichtung voneinander, so dass sich ein Spalt zwischen den beiden Platten 64 bilden kann. Da die beiden Platten 64 jedoch oberhalb der Mittelkonsole 118 liegen, wird dieser Spalt auch in der Position von Fig. 12 von der Mittelkonsole 118 bezüglich des Fahrzeuginnenraums verdeckt.

Falls erforderlich, kann die Geometrie bzw. Abmessung der beiden Platten so gewählt sein, dass sie insbesondere in der Position von Fig. 11 mindestens teilweise im Mittelbereich überlappen, wie dies in Fig. 11 und 12 gezeigt ist.

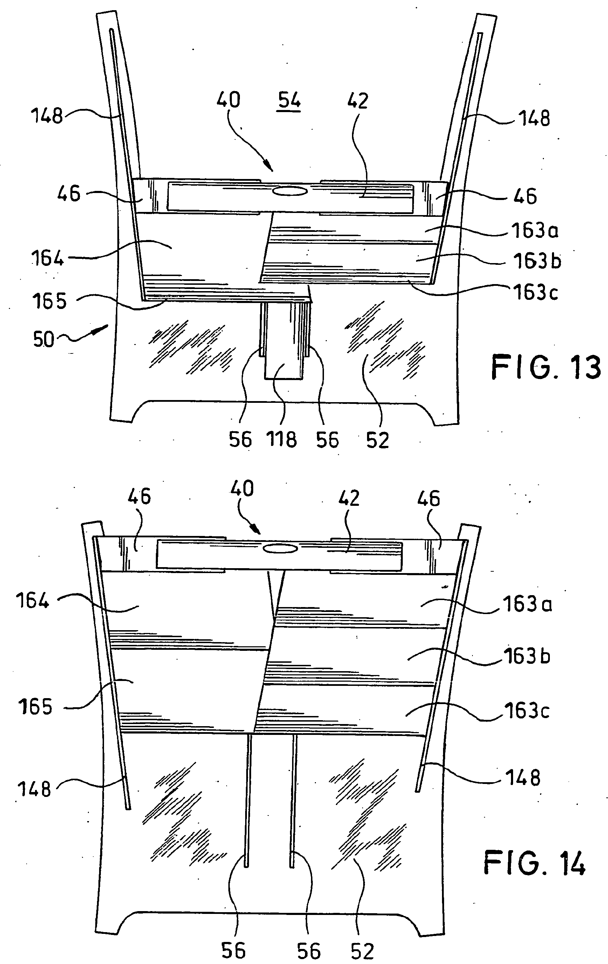

In den Fign. 13 und 14 ist eine bezüglich der Ausführungsform von Fig. 11 und 12 abgewandelte Ausführungsform gezeigt, bei welcher statt je einer einteiligen Platte 64 auf der linken Seite der Mittelkonsole 118 zwei Platten 164 bzw. 165 und auf der rechten Seite der Mittelkonsole 118 drei Platten 163a, b und c vorgesehen sind, die in der in Fig. 13 gezeigten Stellung, in welcher die Quertraverse 40 ganz an das hintere Ende der Aussparung 54 geschoben ist, jeweils übereinander geschoben sind. Die Platte 164 bzw. 163a ist dabei fest mit dem jeweiligen Seitenteil 46 verbunden und wird zu einer Verschiebung in der Dachlängsrichtung von der Quertraverse 40 mitgenommen. Alle Platten sind in der am seitlichen Rand des Himmelmoduls 50 verlaufenden Führung 148 geführt. Da die beiden Platten 164, 165 bzw. die drei Platten 163a, b und c in der Fig. 13 gezeigten Position der Himmelfläche 52 im hinteren Teil des Himmelmoduls 50 übereinander liegend angeordnet sind, müssen sich die Führungen 148 nicht soweit nach hinten erstrecken wie bei der Ausführungsform von Fig. 11 und 12.

Mittels Verschiebung der Quertraverse 40 nach vom wird die jeweilige Platte 164 nach vom mitgenommen, welche ihrerseits dann die jeweilige Platte 165 nach vom mitnimmt, bis die in Fig. 14 gezeigte Position erreicht ist. Die Abdeckfunktion der beiden Platten 164, 165 entspricht derjenigen der Platte 64 aus der Ausführungsform von Fig. 11 und 12.

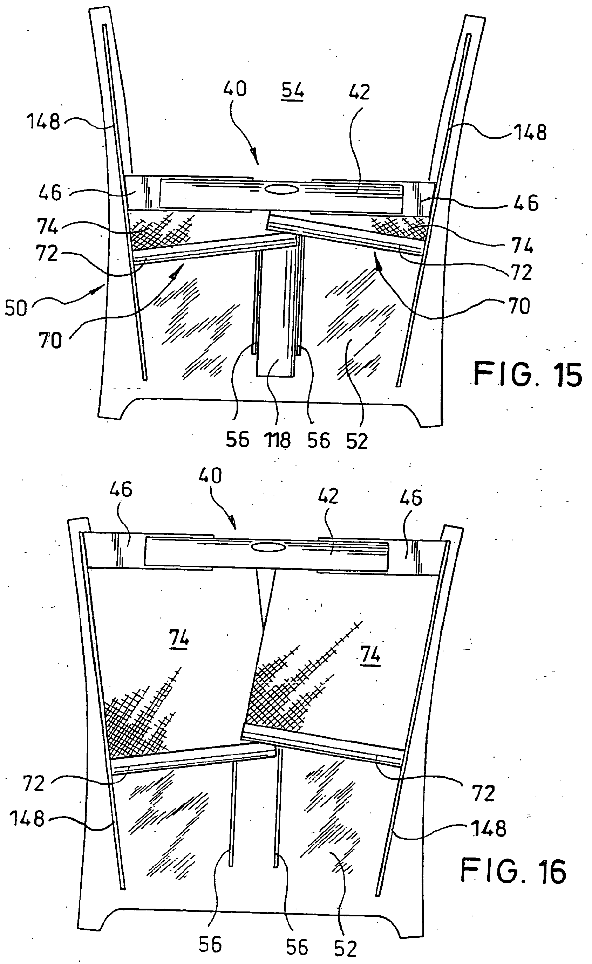

In den Fign. 15 und 16 ist eine Abwandlung der Ausführungsformen gemäß Fig. 11 bis 14 gezeigt, bei welcher statt Abdeckplatten auf jeder Seite der Mittelkonsole 118 eine Rolloanordnung 70 vorgesehen ist, die jeweils von einer Wickelwelle 72 und einer Rollobahn 74 gebildet wird. Die beiden Wickelwellen 72 sind kreiszylindrisch ausgebildet, wobei die Rollobahnen 74 als gerade Bahnen, d.h. mit parallelen Rändern, ausgebildet sind. Das jeweilige vordere Ende jeder Rolloanordnung 70 ist fest mit dem jeweiligen Seitenteil 46 der Quertraverse 40 verbunden, so dass beim Verschieben der Quertraverse 40 nach vom ein Abwickeln der jeweiligen Rollobahn 74 von der jeweiligen Wickelwelle 72 erfolgt. Der jeweilige nach außen weisende Rand der Rollobahnen 74 ist entlang der jeweiligen Führungsschiene 148 verschiebbar geführt. Da die beiden Führungen 148 divergent verlaufen, sind die beiden Wickelwellen 72 unter einem entsprechenden Winkel bezüglich der Fahrzeugquerrichtung dachfest montiert.

In Fig. 15 ist eine Position gezeigt, in welcher die Quertraverse 40 bis an das hintere Ende der Aussparung 54 geschoben ist, so dass die Rollobahnen 74 im wesentlichen auf die Wickelwellen 72 aufgewickelt sind.

Ausgehend von der in Fig. 15 gezeigten Position wird die Quertraverse 40 nach vom geschoben, bis sie das vordere Ende der Führungsschienen 148 erreicht hat. Dabei werden die Rollobahnen 74 von den Wickelwellen 72 abgewickelt, und bedecken in der in Fig. 16 gezeigten Position die Aussparung 54 im wesentlichen vollständig. Aufgrund der geraden Geometrie der Rollobahnen 72 und der Divergenz der Führungen 148 bildet sich beim Ausziehen ein Spalt in der Mitte zwischen den beiden Rollobahnen 74, welcher, da die Rollobahnen oberhalb der Mittelkonsole 118 angeordnet sind, von der Mittelkonsole 118 bezüglich des Fahrzeuginnenraums verdeckt wird.

Das Aufwickeln der Rollobahnen 74 auf die Wickelwellen 72 erfolgt mittels einer entsprechenden Vorspannung der Wickelwellen 72.

Wie in Fig. 15 und 16 gezeigt, können die Rollobahnen 74 im Bereich der Wickelwellen 72 zum Teil überlappen.

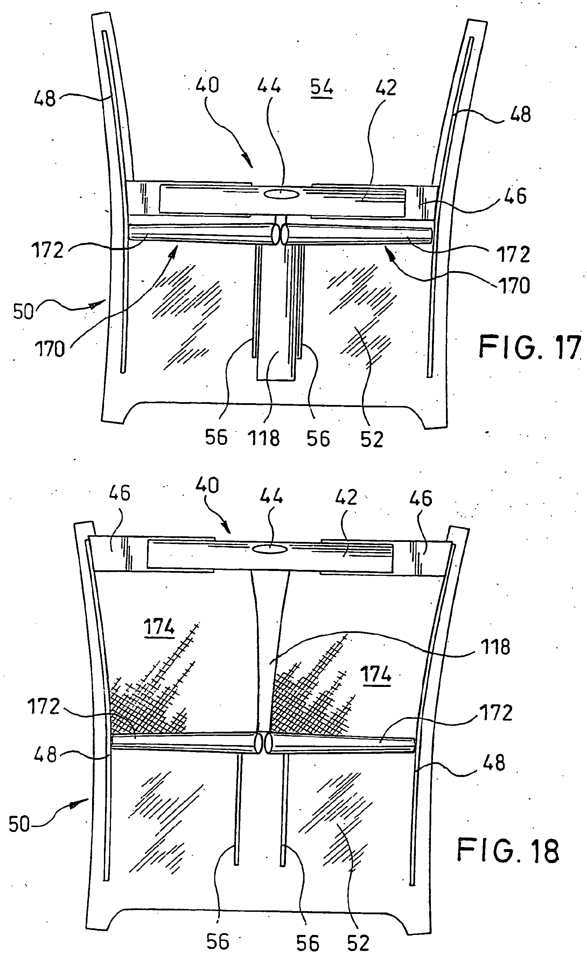

Die Ausführungsform von Fig. 17 und 18 unterscheidet sich von der Ausführungsform gemäß Fig. 15 und 16 dadurch, dass statt zwei geraden Wickelwellen 72, die jeweils unter einem Winkel bezüglich der Dachquerrichtung angeordnet sind, zwei konische Wickelwellen 172 vorgesehen sind, die in Dachquerrichtung verlaufen und fluchtend zu einander ausgerichtet sind, wobei das dickere Ende der Wickelwelle 172 jeweils in der Dachmitte liegt. Aufgrund der Konizität der Wickelwellen 172 ist die dazugehörige Rollobahn 174 nicht gerade, d.h. mit zwei parallelen Kanten, ausgebildet, sondern die beiden Kanten können gekrümmt sein, wodurch sich auch ein gekrümmter Verlauf der am Außenrand des Himmelmoduls 50 verlaufenden Führung 148 beim Abwickeln der Rollobahn 174 nachgebildet werden kann, siehe Fig. 18, wo die beiden Rollobahnen 174 der Rolloanordnungen 170 im ausgezogenen Zustand gezeigt sind. Der sich zwischen den beiden Rollobahnen 174 bildende Spalt wird von der Mittelkonsole 118 verdeckt, da die beiden Rolloanordnungen 170 oberhalb der Mittelkonsole 118 angeordnet sind.

Als weitere Alternative können die beiden Abdeckeinrichtungen auch jeweils als ziehharmonika-artige Jalousie ausgebildet sein (nicht gezeigt).

Bei der Fertigung des Fahrzeugdaches wird zunächst das Himmelmodul 50 gefertigt, wobei dieses an seiner Oberseite mit den integrierten Führungsschienen versehen wird, und wobei die in den Führungen zu verschiebenden Abdeck- bzw. Trägerelemente in die Führungen eingesetzt werden bzw. in Eingriff gebracht werden. Das auf diese Weise bereits vormontierte und mit den Abdeck-/Trägerelementen (z.B. Quertraverse 40, Mittelkonsole 118, Abdeckplatten 64 usw.) versehene Himmelmodul 50 wird dann als Ganzes von vom durch die Windschutzscheibenöffnung der Fahrzeugkarosserie eingesetzt und von unten an dem festen Dachbereich der Karosserie fest angebracht, um den Dachbereich bezüglich des Fahrzeuginnenraums zu verkleiden.

### Bezugszeichenliste

- 10: Windschutzscheibe
- 12: hinterer Rand von 10
- 14: Kopfstützen
- 16: Seitenholm/A-Säule
- 18: Mittelkonsole
- 20: Innenrückspiegel
- 22: Zugspriegel
- 24: Rolloanordnung
- 26: undurchsichtiger Dachabschnitt
- 28: Sonnenblenden
- 30: Führungen in 18
- 32: seitl. Rand von 24
- 40: Quertraverse
- 42: Mittelteil
- 44: Betätigungselement
- 46: Seitenteile
- 48: Führungen
- 50: Himmelmodul
- 52: Himmelfläche
- 54: Aussparung in 52
- 56: Führungen
- 58: Ablagefach
- 60: Querspriegel
- 64: Abdeckplatte
- 70: Rolloanordnung
- 72: Rollobahn
- 74: Wickelwelle
- 118: Mittelkonsole
- 148: Führung
- 163a-c: Abdeckplatte
- 164, 165: Abdeckplatte
- 170: Rolloanordnung
- 172: gerade Wickelwellen
- 174: Rollobahn

## Patentansprüche

1. Fahrzeugdach mit einer in Dachquerrichtung verlaufenden Quertraverse (40), die an jeder Seite in einer Führung (48) in Dachlängsrichtung verschiebbar geführt ist, wobei die Quertraverse mit klappbaren Sonnenblenden (28) versehen ist, **dadurch gekennzeichnet, dass** die beiden seitlichen Führungen (48) mindestens über einen Teil divergent verlaufen, wobei die Quertraverse (40) zwei miteinander verbundene Seitenteile (46) aufweist, mittels welchen die Quertraverse jeweils in der seitlichen Führung geführt ist und welche in Dachquerrichtung relativ zueinander verschiebbar sind, um die Divergenz der seitlichen Führungen auszugleichen, und wobei die Sonnenblenden jeweils an den Seitenteilen vorgesehen sind.

2. Fahrzeugdach gemäß Anspruch 1, **dadurch gekennzeichnet, dass** die beiden Seitenteile (46) durch ein Mittelteil (42) miteinander verbunden sind.

3. Fahrzeugdach gemäß Anspruch 2, **dadurch gekennzeichnet, dass** das Mittelteil (42) mit einem Betätigungselement (44) versehen ist, mittels welchem die Quertraverse (40) manuell in Dachlängsrichtung verschoben werden kann.

4. Fahrzeugdach gemäß Anspruch 3, **dadurch gekennzeichnet, dass** das Betätigungselement (44) als Griff oder Mulde ausgebildet ist.

5. Fahrzeugdach nach einem der vorhergehenden Ansprüche, mit einer sich in Dachlängsrichtung erstreckenden Mittelkonsole (118), sowie je einer auf jeder Seite der Mittelkonsole sich zwischen der Mittelkonsole und dem jeweiligen seitlichen Dachrand (16) erstreckenden, in Dachlängrichtung verschiebbaren oder ausziehbaren Abdeckeinrichtung (64, 70, 163a-c, 164, 165, 170), die an dem jeweiligen seitlichen Dachrand geführt ist, wobei die in Dachquerrichtung verlaufende Quertraverse (40), die an jeder Seite in einer Führung (48, 148) in Dachlängsrichtung verschiebbar geführt ist, vorgesehen ist, um das vordere Ende beider Abdeckeinrichtungen für die Verschiebung in Dachlängsrichtung mitzunehmen, wobei die maximale Divergenz der Führungen (48, 148) an den beiden seitlichen Dachrändern (16) kleiner ist als die Breite der Mittelkonsole (118).

6. Fahrzeugdach gemäß Anspruch 5, **dadurch gekennzeichnet, dass** die Mittelkonsole (118) unterhalb des Niveaus des zur Dachmitte hin weisenden Rands der jeweiligen Abdeckeinrichtung (64, 70, 163a-c, 164, 165, 170) angeordnet ist.

7. Fahrzeugdach gemäß einem der Ansprüche 5 bis 6, **dadurch gekennzeichnet, dass** die Mittelkonsole dachfest angebracht ist und jede Abdeckeinrichtung an der Mittelkonsole geführt ist.

8. Fahrzeugdach gemäß einem der Ansprüche 5 bis 6, **dadurch gekennzeichnet, dass** die Mittelkonsole (118) in Dachlängsrichtung verschiebbar oder teleskopartig ausziehbar ist und an ihren vorderen Ende von der Quertraverse (40) zur Verschiebung in Dachlängsrichtung mitgenommen wird.

9. Fahrzeugdach gemäß Anspruch 8, **dadurch gekennzeichnet, dass** jede Abdeckeinrichtung (64, 70, 163a-c, 164, 165, 170) an der Mittelkonsole (118) derart gelagert ist, dass sie bezüglich der Mittelkonsole in Dachquerrichtung verschiebbar ist, um eine Divergenz der Führungen (48, 148) an den beiden seitlichen Dachrändern (16) auszugleichen.

10. Fahrzeugdach gemäß Anspruch 9, **dadurch gekennzeichnet, dass** jede Abdeckeinrichtung von einer einzigen Abdeckplatte (64) gebildet wird.

11. Fahrzeugdach gemäß Anspruch 9, **dadurch gekennzeichnet, dass** jede Abdeckeinrichtung von mindestens zwei Abdeckplatten (163a-c, 164, 165) gebildet wird, die im ausgezogenen Zustand hintereinander angeordnet sind, wobei im nicht ausgezogenen Zustand benachbarte Abdeckplatten mindestens teilweise überlappen.

12. Fahrzeugdach gemäß einem der Ansprüche 5 oder 6, **dadurch gekennzeichnet, dass** jede Abdeckeinrichtung von einem Rollo (70, 170) gebildet wird, dessen Wickelwelle (72, 172) dachfest angebracht ist und dessen ausziehbares Ende von der Quertraverse (40) mitgenommen wird.

13. Fahrzeugdach gemäß Anspruch 12, **dadurch gekennzeichnet, dass** die Wickelwellen (72) zylindrisch ausgebildet ist und unter einem Winkel zur Dachlängsrichtung montiert sind, welcher der Divergenz der Führungen (148) an den beiden seitlichen Dachrändern (16) entspricht.

14. Fahrzeugdach gemäß Anspruch 13, **dadurch gekennzeichnet, dass** die Wickelwellen (172) konisch ausgebildet und in Dachquerrichtung verlaufend montiert sind.

## Claims

1. Vehicle roof with a cross piece (40) which runs in the transverse direction of the roof and is guided displaceably in the longitudinal direction of the roof in a guide (48) on each side, wherein the cross piece is provided with foldable sun visors (28), **characterized in that** the two lateral guides (48) run divergently at least over a part, wherein the cross piece (40) has two interconnected side parts (46) by means of which the cross piece is in each case guided in the lateral guide and which are displaceable relative to each other in the transverse direction of the roof in order to compensate for the divergence in the lateral guides, and wherein the sun visors are in each case provided on the side parts.

2. Vehicle roof according to Claim 1, **characterized in that** the two side parts (46) are connected to each other by a central part (42).

3. Vehicle roof according to Claim 2, **characterized in that** the central part (42) is provided with an actuating element (44) by means of which the cross piece (40) can be displaced manually in the longitudinal direction of the roof.

4. Vehicle roof according to Claim 3, **characterized in that** the actuating element (44) is designed as a handle or trough.

5. Vehicle roof according to one of the preceding claims, with a central console (118) extending in the longitudinal direction of the roof, and with a respective covering device (64, 70, 163a-c, 164, 165, 170) which, on each side of the central console, extends between the central console and the respective lateral roof edge (16), is displaceable or extendable in the longitudinal direction of the roof and is guided on the respective lateral roof edge, wherein the cross piece (40) which runs in the transverse direction of the roof and is guided displaceably in the longitudinal direction of the roof in a guide (48, 148) on each side is provided in order to carry along the front end of the two covering devices for the displacement in the longitudinal direction of the roof, wherein the maximum divergence of the guides (48, 148) on the two lateral roof edges (16) is smaller than the width of the central console (118).

6. Vehicle roof according to Claim 5, **characterized in that** the central console (118) is arranged below the level of that edge of the respective covering device (64, 70, 163a-c, 164, 165, 170) which points towards the centre of the roof.

7. Vehicle roof according to either of Claims 5 and 6, **characterized in that** the central console is mounted in a manner fixed to the roof, and each covering device is guided on the central console.

8. Vehicle roof according to either of Claims 5 and 6, **characterized in that** the central console (118) is displaceable or is telescopically extendable in the longitudinal direction of the roof and is carried along at the front end thereof by the cross piece (40) for the displacement in the longitudinal direction of the roof.

9. Vehicle roof according to Claim 8, **characterized in that** each covering device (64, 70, 163a-c, 164, 165, 170) is mounted on the central console (118) in such a manner that said covering device is displaceable in the transverse direction of the roof with respect to the central console in order to compensate for divergence of the guides (48, 148) on the two lateral roof edges (16).

10. Vehicle roof according to Claim 9, **characterized in that** each covering device is formed by a single covering plate (64).

11. Vehicle roof according to Claim 9, **characterized in that** each covering device is formed by at least two covering plates (163a-c, 164, 165) which, in the extended state, are arranged one behind the other, wherein adjacent covering plates at least partially overlap in the non-extended state.

12. Vehicle roof according to either of Claims 5 and 6, **characterized in that** each covering device is formed by a roller blind (70, 170), the winding shaft (72, 172) of which is mounted in a manner fixed to the roof and the extendable end of which is carried along by the cross piece (40).

13. Vehicle roof according to Claim 12, **characterized in that** the winding shafts (72) are formed cylindrically and are mounted at an angle to the longitudinal direction of the roof, said angle corresponding to the divergence of the guides (148) on the two lateral roof edges (16).

14. Vehicle roof according to Claim 13, **characterized in that** the winding shafts (172) are formed conically and are mounted running in the transverse direction of the roof.

## Revendications

1. Toit de véhicule comprenant une traverse (40) s'étendant dans la direction transversale du toit, laquelle est guidée de manière déplaçable dans la direction longitudinale du toit de chaque côté dans une glissière (48), la traverse étant munie de pare-soleil rabattables (28), **caractérisé en ce que** les deux glissières latérales (48) s'étendent de manière divergente sur au moins une partie, la traverse (40) présentant deux parties latérales (46) connectées l'une à l'autre, au moyen desquelles la traverse est guidée à chaque fois dans la glissière latérale, et lesquelles peuvent être déplacées les unes par rapport aux autres dans la direction transversale du toit, afin de compenser la divergence des glissières latérales, et les pare-soleil étant prévus à chaque fois au niveau des parties latérales.

2. Toit de véhicule selon la revendication 1, **caractérisé en ce que** les deux parties latérales (46) sont connectées l'une à l'autre par une partie centrale (42).

3. Toit de véhicule selon la revendication 2, **caractérisé en ce que** la partie centrale (42) est munie d'un élément d'actionnement (44) au moyen duquel la traverse (40) peut être déplacée manuellement dans la direction longitudinale du toit.

4. Toit de véhicule selon la revendication 3, **caractérisé en ce que** l'élément d'actionnement (44) est réalisé sous forme de poignée ou de creux.

5. Toit de véhicule selon l'une quelconque des revendications précédentes, comprenant une console centrale (118) s'étendant dans la direction longitudinale du toit, ainsi qu'un dispositif de recouvrement respectif (64, 70, 163a-c, 164, 165, 170) s'étendant de chaque côté de la console centrale entre la console centrale et le bord de toit latéral respectif (16), pouvant être coulissé ou déployé dans la direction longitudinale du toit, lequel dispositif de recouvrement est guidé sur le bord de toit latéral respectif, la traverse (40) s'étendant dans la direction transversale du toit, laquelle est guidée de manière coulissante de chaque côté dans une glissière (48, 148) dans la direction longitudinale du toit, étant prévue pour entraîner l'extrémité avant des deux dispositifs de recouvrement en vue du coulissement dans la direction longitudinale du toit, la divergence maximale des glissières (48, 148) au niveau des deux bords de toit latéraux (16) étant inférieure à la largeur de la console centrale (118).

6. Toit de véhicule selon la revendication 5, **caractérisé en ce que** la console centrale (118) est disposée en dessous du niveau du bord tourné vers le centre du toit de chaque dispositif de recouvrement respectif (64, 70, 163a-c, 164, 165, 170).

7. Toit de véhicule selon l'une quelconque des revendications 5 à 6, **caractérisé en ce que** la console centrale est montée de manière fixée au toit et chaque dispositif de recouvrement est guidé sur la console centrale.

8. Toit de véhicule selon l'une quelconque des revendications 5 à 6, **caractérisé en ce que** la console centrale (118) peut être déployée de manière télescopique ou coulisser dans la direction longitudinale du toit et est entraînée au niveau de son extrémité avant par la traverse (40) en vue de son coulissement dans la direction longitudinale du toit.

9. Toit de véhicule selon la revendication 8, **caractérisé en ce que** chaque dispositif de recouvrement (64, 70, 163a-c, 164, 165, 170) est monté sur la console centrale (118) de telle sorte qu'il puisse être coulissé par rapport à la console centrale dans la direction transversale du toit, afin de compenser une divergence des glissières (48, 148) au niveau des deux bords de toit latéraux (16).

10. Toit de véhicule selon la revendication 9, **caractérisé en ce que** chaque dispositif de recouvrement est formé par une plaque de recouvrement unique (64).

11. Toit de véhicule selon la revendication 9, **caractérisé en ce que** chaque dispositif de recouvrement est formé par au moins deux plaques de recouvrement (163a-c, 164, 165), qui sont disposées l'une derrière l'autre dans l'état déployé, des plaques de recouvrement adjacentes dans l'état non déployé se recouvrant au moins partiellement.

12. Toit de véhicule selon l'une quelconque des revendications 5 ou 6, **caractérisé en ce que** chaque dispositif de recouvrement est formé par un store déroulant (70, 170), dont l'arbre d'enroulement (72, 172) est monté de manière fixée au toit et dont l'extrémité déployable est entraînée par la traverse (40).

13. Toit de véhicule selon la revendication 12, **caractérisé en ce que** les arbres d'enroulement (72) sont réalisés de manière cylindrique et sont montés suivant un certain angle par rapport à la direction longitudinale du toit, lequel correspond à la divergence des glissières (148) au niveau des deux bords de toit latéraux (16).

14. Toit de véhicule selon la revendication 13, **caractérisé en ce que** les arbres d'enroulement (172) sont réalisés sous forme conique et sont montés de manière à s'étendre dans la direction transversale du toit.
